# EUROPÄISCHE PATENTSCHRIFT

(11) **EP 3 081 325 B1**
(45) Veröffentlichungstag und Bekanntmachung des Hinweises auf die Patenterteilung: **12.12.2018**
(21) Anmeldenummer: 16164407.5
(22) Anmeldetag: 08.04.2016
(51) Int. Cl.: B23D 47/04, B27B 5/065

(54) **PLATTENAUFTEILANLAGE**
PANEL CUTTING ASSEMBLY
INSTALLATION DE COUPE DE PANNEAUX

(30) Priorität: 14.04.2015 DE 102015206660
(43) Veröffentlichungstag der Anmeldung: 19.10.2016
(73) Patentinhaber: HOMAG Plattenaufteiltechnik GmbH, 75365 Calw (DE)
(72) Erfinder: KRETEK, David, 72213 Altensteig (DE); ZIMBAKOV, Darko, 71155 Altdorf (DE); KAISER, Jonathan, 71131 Jettingen (DE); BLAICH, Markus, 75365 Calw-Stammheim (DE); SCHMIDT, Tibor, 72218 Wildberg (DE)
(74) Vertreter: DREISS Patentanwälte PartG mbB

(56) Entgegenhaltungen:
- EP-A1- 0 019 292
- EP-A1- 1 964 653
- EP-A1- 2 210 719
- EP-A1- 2 251 128
- EP-A2- 2 111 939
- WO-A1-2006/024058
- WO-A1-2008/038133
- DE-A1-102008 058 162
- GB-A- 773 141
- GB-A- 1 151 522
- JP-A- 2002 187 016

## Beschreibung

Die Erfindung betrifft eine Plattenaufteilanlage nach dem Oberbegriff des Anspruchs 1.

Übliche Plattenaufteilanlagen umfassen einen Zuführtisch, einen Entnahmetisch, und einen zwischen Entnahmetisch und Zuführtisch angeordneten Maschinentisch. In dem Maschinentisch befindet sich eine Aufteillinie, meist in Form eines Aufteilspalts. Durch diesen kann eine Säge mit einem Sägeblatt oder ein Fräser mit einem Fräskopf längs zur Aufteillinie bewegt werden. Oberhalb von dem Maschinentisch ist ein Druckbalken angeordnet, der dazu dient, während eines Aufteilvorgangs ein Werkstück zu fixieren sowie die bei der Aufteilung entstehenden Späne zu erfassen. Hierzu wird der Druckbalken vertikal in Richtung auf den Maschinentisch abgesenkt, wodurch das Werkstück zwischen Druckbalken und Maschinentisch verklemmt wird.

Die EP 0 508 276 A1 beschreibt eine Plattenaufteilanlage mit einem Maschinentisch, auf den seitliche Füße aufgeschraubt sind. Zwischen diesen Füßen sind zwei kastenförmige Träger angeordnet, an denen jeweils ein durch ein flaches Blech gebildeter Druckbalken gehalten ist. Der Druckbalken kann in vertikaler Richtung durch seitlich außerhalb von den Füßen angeordnete Antriebe in Form von Pneumatikzylindern bewegt werden.

### Würdigung Stand der Technik

Die WO 2008/038133 A1 beschreibt eine Sägemaschine für Platten aus Holz oder ähnlichen Materialien mit Merkmalen des Oberbegriffs des vorliegenden Anspruchs 1.

Die EP 2 210 719 A1 beschreibt ein Verfahren zur Herstellung von Bauteilen aus Holz oder Plastik mit Merkmalen des Oberbegriffs des vorliegenden Anspruchs 1.

Die JP 2002-187016 A beschreibt eine Plattenaufteilanlage mit Merkmalen des vorliegenden Anspruchs.

Die DE 10 2008 058 162 A1 beschreibt eine Sägemaschine zum Zersägen mindestens eines Werkstücks, die Merkmale des Oberbegriffs des vorliegenden Anspruchs aufweist.

Aufgabe der vorliegenden Erfindung ist es, eine Plattenaufteilanlage zu schaffen, welche mit hoher Dynamik betrieben werden kann.

Diese Aufgabe wird durch eine Plattenaufteilanlage mit den Merkmalen des Anspruchs 1 gelöst. Vorteilhafte Weiterbildungen der Erfindung sind in Unteransprüchen angegeben. Darüber hinaus finden sich für die Erfindung wichtige Merkmale in der nachfolgenden Beschreibung sowie in der Zeichnung. Die Merkmale können dabei sowohl in Alleinstellung als auch in ganz unterschiedlichen Kombinationen für die Erfindung wichtig sein, ohne dass hierauf nochmals explizit hingewiesen wird.

Bei der erfindungsgemäßen Plattenaufteilanlage befindet sich der Antrieb nicht seitlich, sondern direkt über dem Maschinentisch bzw. in dem dort oberhalb von der Aufteillinie vorhandenen Bereich des parallel zur Aufteillinie verlaufenden stationären Trägers. Dies hat den Vorteil, dass die Distanz zwischen dem Antrieb und den Stellen, an denen die Reaktionskräfte in den Druckbalken eingeleitet werden, vergleichsweise gering ist, wodurch die sonst auftretenden und den Druckbalken verformenden Momente reduziert werden. Damit kann der Druckbalken einfacher und leichter gebaut werden, wodurch seine Dynamik, also die Geschwindigkeit, mit der er auf- und ab bewegt werden kann, erhöht wird. Erfindungsgemäß ist ferner, dass der erste Druckbalken in Richtung der Aufteillinie gesehen mindestens zwei unabhängig voneinander bewegbare Segmente aufweist, wobei der Antrieb einen Kurbeltrieb umfasst und die Plattenaufteilanlage zwei Programmschieber umfasst, wobei einer der Programmschieber ein seitlicher Schlitten ist. Hierdurch kann der Tatsache Rechnung getragen werden, dass ein Bedarf bestehen kann, dass unterschiedlich dicke Werkstücke gleichzeitig bearbeitet werden. Durch eine solche Segmentierung des Druckbalkens können auch solche Aufteilvorgänge sicher durchgeführt werden.

Im einfachsten Fall befindet sich der Antrieb zentral in der Mitte zwischen zwei seitlichen Maschinenfüßen, an denen der Träger, an dem der Druckbalken befestigt ist, gehalten ist. Denkbar ist aber auch, dass bei einem solchen zentralen Antrieb dieser etwas in Richtung zu einem Winkellineal hin versetzt angeordnet ist, da vom Druckbalken zu fixierende Werkstücke meist eher benachbart zu einem solchen Winkellineal auf dem Maschinentisch liegen.

Vorgeschlagen wird ferner, dass der Antrieb eine Mehrzahl von Teil-Antrieben umfasst. Derartige Teil-Antriebe können relativ einfach und klein sein, da sie nur einen Teil-Beitrag zur Bewegung des Druckbalkens leisten müssen. Ferner wird die Distanz zwischen dem jeweiligen Teil-Antrieb und den Stellen, an denen Reaktionskräfte in den Druckbalken eingeleitet werden, nochmals reduziert, wodurch die den Druckbalken verformenden Momente nochmals reduziert werden.

Vorgeschlagen wird ferner, dass die Teil-Antriebe mechanisch miteinander gekoppelt sind, beispielsweise durch eine Koppelwelle. Auf diese Weise werden die Teil-Antriebe miteinander synchronisiert, so dass sich der Druckbalken trotz vergleichsweise geringer Steifigkeit gleichmäßig bewegt.

Vorgeschlagen wird ferner, dass der Antrieb einen Kurbeltrieb umfasst. Dies ist eine einfache und stabile Art eines Antriebs. Darüber hinaus kann zum Antrieb ein Drehmotor verwendet werden, also beispielsweise auch ein elektrischer Motor, was ebenfalls der Dynamik des Druckbalkens zugutekommt und die Ansteuerung gegenüber beispielsweise einem pneumatischen Antrieb vereinfacht. Der Kurbeltrieb kann aber auch einfach dazu dienen, mehrere Teil-Antriebe mechanisch miteinander zu koppeln, in dem die Kurbeltriebe an einer gemeinsamen Koppelwelle angreifen.

Vorgeschlagen wird ferner, dass jedem Segment ein eigener Antrieb zugeordnet ist. Die unabhängige Beweglichkeit der einzelnen Segmente kann auf diese Weise besonders einfach realisiert werden.

Vorgeschlagen wird ferner, dass mindestens zwei Segmente in Richtung der Aufteillinie gesehen unterschiedlich lang sind. Insbesondere kann ein zu einem Winkellineal benachbartes Segment kürzer sein als ein von diesem Winkellineal entfernt angeordnetes Segment. Hierdurch wird berücksichtigt, dass in der Praxis dann, wenn zwei Werkstücke gleichzeitig aufgeteilt werden sollen, eines dieser Werkstücke meist streifenförmig, also vergleichsweise schmal ist, und dieses Werkstück meist am Winkellineal angelegt wird. Beispielsweise können das streifenförmige Werkstück im Rahmen eines "Querschnitts" (auch "Zweitschnitt" genannt) und das eher breite Werkstück im Rahmen eines "Längsschnitts" (auch "Erstschnitts" genannt) oder "Nachschnitts" (auch "Drittschnitt" genannt) bearbeitet werden.

Vorgeschlagen wird ferner, dass die Plattenaufteilanlage eine Fördereinrichtung zum Bewegen eines Werkstücks längs zu einer Förderrichtung, die orthogonal zur Aufteillinie liegt, umfasst, und dass sie einen zweiten Druckbalken umfasst, wobei der erste Druckbalken in Förderrichtung gesehen auf der einen Seite und der zweite Druckbalken in Förderrichtung gesehen auf der anderen Seite der Aufteillinie angeordnet sind, und wobei die beiden Druckbalken unabhängig voneinander bewegbar sind. Diese besonders vorteilhafte Weiterbildung der erfindungsgemäßen Plattenaufteilanlage gestattet es beispielsweise, sogenannte Kratzschnitte sowohl an einem in Förderrichtung gesehen vorderen als auch in einem in Förderrichtung gesehen hinteren Rand eines Werkstücks zuverlässig durchzuführen, ohne dass eine starke Verschmutzung der Plattenaufteilanlage durch beidem aufteilen entstehenden Material Staub zu befürchten ist. Einer der beiden Druckbalken fungiert nämlich als so genannter "Staubschutzvorhang". Kratzschnittes sind solche Schnitte, bei denen von einem Sägeblatt an einem Rand eines Werkstücks eine geringere Werkstücklänge abgetragen wird als das Sägeblatt dick ist.

Vorgeschlagen wird ferner, dass der erste Druckbalken und der zweite Druckbalken identisch ausgebildet sind. Hierdurch werden die Herstellkosten der Plattenaufteilanlage reduziert.

Vorgeschlagen wird ferner, dass die beiden Druckbalken an einem gemeinsamen Träger gehalten sind. Dies reduziert Eder ebenfalls die Herstellkosten. Darüber hinaus wird Bauraum eingespart.

Vorgeschlagen wird ferner, dass der gemeinsame Träger im Querschnitt C-förmig ist. Ein solcher Träger ist in Bewegungsrichtung der beiden Druckbalken besonders steif. Dabei ist es besonders günstig, wenn die beiden Schenkel des Trägers seitlich außen von den beiden Druckbalken angeordnet sind, und der Antrieb bzw. die Antriebe im Inneren des Trägers angeordnet sind. Dies hat optische Vorteile, führt aber auch zu einer geschützten Anordnung von Führungen und Antrieben.

Vorgeschlagen wird ferner, dass der gemeinsame Träger im Querschnitt T-förmig ist. Ein solcher Träger ist ebenfalls steif, baut jedoch insgesamt kleiner und leichter.

Vorgeschlagen wird ferner, dass zwischen den Druckbalken ein Wandelement angeordnet ist, welches eine obere Begrenzungswand eines Absaugkanals bildet. Damit wird ein besonders dichter und damit effizienter Absaugkanal geschaffen.

Vorgeschlagen wird ferner, dass sich der Abstand des ersten Druckbalkens von der Aufteillinie von dem Abstand des zweiten Druckbalkens von der Aufteillinie unterscheidet.

Dies hat insbesondere dann Vorteile, wenn eine Fördereinrichtung, die einen Programmschieber mit Spannzangen umfasst, die Werkstücke von einem Zuführtisch zur Aufteillinie fördert. Wenn die Aufteillinie näher zu jenem Druckbalken ist, der in Richtung des Programmschiebers angeordnet ist, als zu dem anderen Druckbalken, besteht ein geringeres Kollisionsrisiko der Fingern von Spannzangen mit dem vom Programmschieber entfernt angeordneten Druckbalken dann, wenn sich der Programmschieber in seiner zur Aufteillinie benachbarten Endstellung befindet.

Nachfolgend werden Ausführungsformen der Erfindung unter Bezugnahme auf die beiliegende Zeichnung erläutert. In der Zeichnung zeigen:
Figur 1 eine Draufsicht auf eine Plattenaufteilanlage mit einem Maschinentisch und einer Druckbalkeneinrichtung;
Figur 2 einen schematischen Schnitt durch den Maschinentisch und die Druckbalkeneinrichtung von Figur 1, wobei auch ein C-förmiger Träger sichtbar ist;
Figur 3 einen nochmals vereinfachten schematischen Schnitt durch den Maschinentisch, wobei die Druckbalkeneinrichtung von Figur 2 für eine erste Betriebssituation angesteuert ist;
Figur 4 eine Darstellung ähnlich Figur 3, wobei die Druckbalkeneinrichtung für eine zweite Betriebssituation angesteuert ist;
Figur 5 eine Darstellung ähnlich Figur 4, wobei die Druckbalkeneinrichtung ebenfalls für die zweite Betriebssituation angesteuert ist;
Figur 6 eine Darstellung ähnlich Figur 3, wobei die Druckbalkeneinrichtung für eine dritte Betriebssituation angesteuert ist;
Figur 7 eine perspektivische Darstellung der Druckbalkeneinrichtung von Figur 2;
Figur 8 eine perspektivische Darstellung der Druckbalkeneinrichtung von Figur 7, jedoch ohne den C-förmigen Träger;
Figur 9 eine Darstellung ähnlich zu Figur 2 einer zweiten Ausführungsform einer Druckbalkeneinrichtung mit einem T-förmigen Träger;
Figur 10 einen teilweisen Schnitt durch die Druckbalkeneinrichtung von Figur 9;
Figur 11 eine perspektivische Darstellung der Druckbalkeneinrichtung von Figur 9;
Figur 12 eine schematische Vorderansicht einer dritten Ausführungsform einer Druckbalkeneinrichtung in einer dritten Betriebssituation;
Figur 13 eine Darstellung ähnlich zu Figur 12 mit der Druckbalkeneinrichtung in einer vierten Betriebssituation; und
Figur 14 eine Darstellung ähnlich zu Figur 12 einer vierten Ausführungsform einer Druckbalkeneinrichtung.

In den Figuren sind funktionsäquivalente Elemente und Bereiche auch in unterschiedlichen Ausführungsformen mit den gleichen Bezugszeichen bezeichnet.

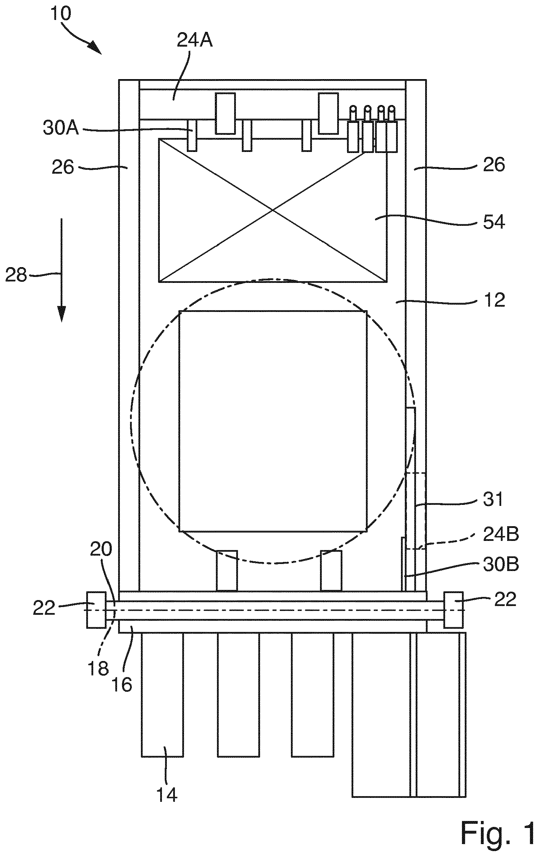

Eine Plattenaufteilanlage trägt in Figur 1 insgesamt das Bezugszeichen 10. Sie umfasst einen Zuführtisch 12, einen aus mehreren Segmenten bestehenden Entnahmetisch 14, und einen zwischen dem Zuführtisch 12 und dem Entnahmetisch 14 angeordneten Maschinentisch 16. Der Zuführtisch 12 besteht aus einer Vielzahl von Rollenschienen, der Entnahmetisch 14 und der Maschinentisch 16 sind dagegen als Luftkissentische ausgebildet.

In dem Maschinentisch 16 ist eine Aufteillinie 18 vorhanden, die als ein Sägespalt ausgebildet ist, in Figur 1 jedoch nur als strichpunktierte Linie dargestellt ist. Längs der Aufteillinie 18 kann eine Sägeeinrichtung bewegt werden. Bei einer nicht dargestellten Ausführungsform erfolgt die Aufteilung nicht mittels einer Säge, sondern beispielsweise mittels eines Fräsers.
In einem Bereich oberhalb von der Aufteillinie 18 ist eine Druckbalkeneinrichtung 20 vorhanden. Diese umfasst zwei seitlich vom Maschinentisch 16 angeordnet vertikale Ständer 22, mittels denen die Druckbalkeneinrichtung 20 auf einem Boden (ohne Bezugszeichen) geständert ist. Auf die Druckbalkeneinrichtung 20 wird weiter unten noch stärker im Detail eingegangen werden.

Zu der Plattenaufteilanlage 10 gehört auch eine Fördereinrichtung in Form eines Programmschiebers 24 A, der auf seitlichen Schienen 26 längs zu einer Förderrichtung 28 mittels eines nicht gezeigten Antriebs bewegt werden kann. Die Aufteillinie 18 erstreckt sich dabei zwischen den beiden seitlichen Schienen 26. Sie kann auch als "Schnittbereich" bezeichnet werden. Auf der zum Maschinentisch 16 hin weisenden Seite des Programmschiebers 24 sind eine Mehrzahl von Spannzangen 30 A angeordnet, von denen vorliegend aus Gründen der Übersichtlichkeit jedoch nur eine mit einem Bezugszeichen versehen ist. Man erkennt ohne weiteres, dass die Förderrichtung 28 orthogonal zur Aufteillinie 18 liegt. Zu der Fördereinrichtung gehört ferner ein Programmschieber in Form eines Schlittens 24 B, der an der in Figur 1 rechten Schiene 26 in Förderrichtung 28 verschieblich gehalten ist und an dem eine spezielle Spannzange 30 B befestigt ist. Der Schlitten 24 B und der Programmschieber 24 A können unabhängig voneinander betrieben werden. Die Spannzangen 30 A und 30 B können relativ zum Programmschieber 24 A bzw. zum Schlitten 24 B angehoben und abgesenkt werden.

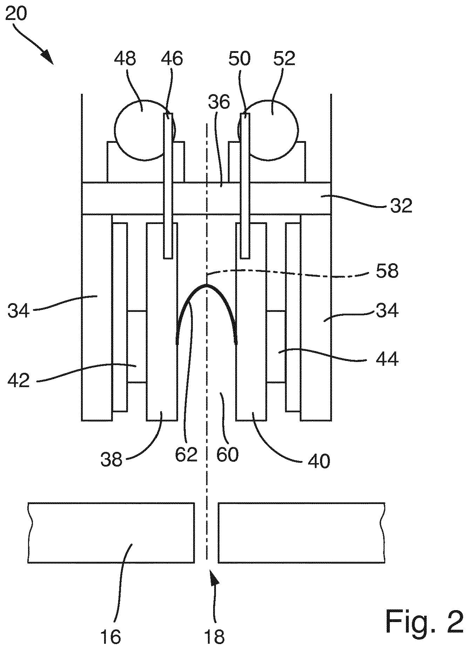

Im Bereich der in Figur 1 rechten seitlichen Schienen 26 des Zuführtisches 12 ist ein Winkellineal 31 vorhanden, welches zur Anlage und Ausrichtung eines auf dem Zuführtisch 12 liegenden Werkstücks dient. In dem zu dem Winkellineal 31 benachbarten Bereich ist seitlich vom Maschinentisch 16 eine Absaugung (ohne Bezugszeichen, nicht dargestellt) vorhanden, auf die weiter unten noch eingegangen werden wird.
Aus Figur 2 ist ersichtlich, dass die Druckbalkeneinrichtung 20 einen C-förmigen Träger 32 aufweist, der zwei vertikale Schenkel 34 und eine horizontale Basis 36 umfasst. Der C-förmige Träger 32 ist an seinen axialen Enden an den Ständern 22 befestigt. Ferner weist die Druckbalkeneinrichtung 20 einen ersten Druckbalken 38 und einen zweiten und zu dem ersten Druckbalken 38 identischen Druckbalken 40 auf.

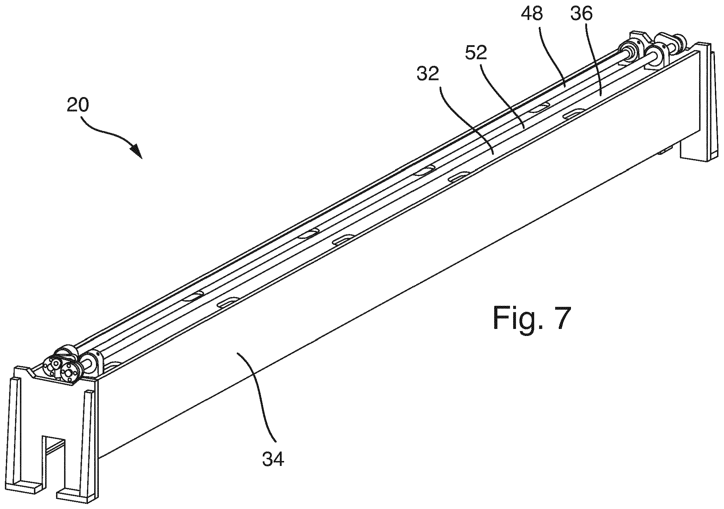

Bei den beiden Druckbalken 38 und 40 handelt es sich, wie beispielsweise aus Figur 7 ersichtlich ist, jeweils um ein lang gestrecktes plattenartiges Element, welches beispielsweise aus einem Stahlblech hergestellt ist. Die Druckbalken 38 und 40 sind mittels Linearführungen 42 und 44 vertikal verschieblich an den beiden vertikalen Schenkeln 34 des C-förmigen Trägers 32 gehalten. Die beiden Druckbalken 38 und 40 sind also an dem gemeinsamen C-förmigen Träger 32 gehalten. Der erste Druckbalken 38 ist an seinen beiden Stirnseiten jeweils über ein erstes Pleuel 46, welches insoweit einen Kurbeltrieb bildet, mit einer ersten Koppelwelle 48 verbunden. Der zweite Druckbalken 40 ist ebenfalls an seinen beiden Stirnseiten jeweils über ein zweites Pleuel 50, welches insoweit ebenfalls einen Kurbeltrieb bildet, mit einer zweiten Koppelwelle 52 verbunden. Die beiden Koppelwellen 48 und 52 sind auf der Oberseite der horizontalen Basis 36 des C-förmigen Trägers 32 angeordnet.

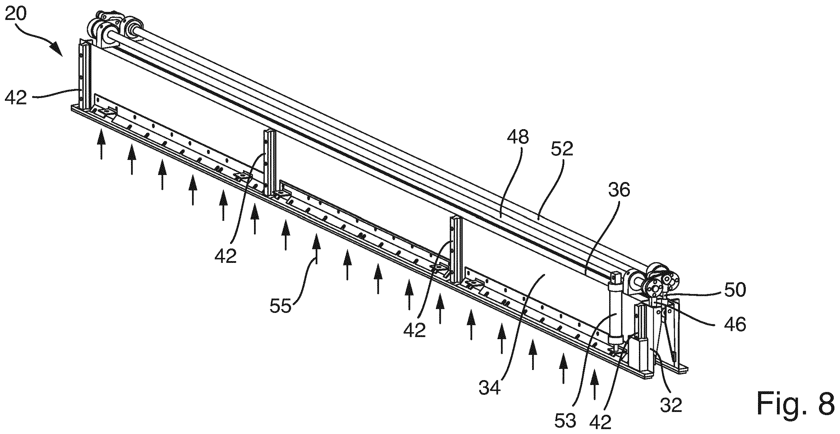

Jedem Druckbalken 38 und 40 sind bei der vorliegenden Ausführungsform vier Pneumatikzylinder zugeordnet, deren Zylindergehäuse (ohne Bezugszeichen) an dem Träger 32 befestigt ist, wohingegen deren Kolbenstange (ohne Bezugszeichen) am jeweiligen Druckbalken 38 bzw. 40 befestigt ist. Die Pneumatikzylinder sind im Bereich der Linearführungen 42 bzw. 44 angeordnet und in der Zeichnung lediglich in Figur 8 und dort auch nur an einer Stelle, nämlich bei der in Figur 8 äußersten rechten und vorderen Linearführung 42 dargestellt. Der dort abgebildete Pneumatikzylinder hat das Bezugszeichen 53. Jeder der vier Pneumatikzylinder 53 bildet einen Teil-Antrieb für den ihm jeweils zugeordneten Druckbalken 38 bzw. 40, und alle vier Pneumatikzylinder 53 eines Druckbalkens 38 bzw. 40 bilden zusammen dessen "Gesamt-Antrieb".

Durch die beiden Koppelwellen 48 und 52 wird sichergestellt, dass sich die Druckbalken 38 und 40 trotz der Mehrzahl von Pneumatikzylindern 53 gleichförmig bewegen. Ferner wird verhindert, dass ein Druckbalken 38 oder 40 oder beide Druckbalken 38 und 40 bei der Fixierung von Werkstücken mit unterschiedlicher Länge ungleichmäßig belastet werden. Aus Figur 8 erkennt man, dass die Distanz zwischen den Antrieben 53 und den Stellen, an denen die Reaktionskräfte in den Druckbalken 38 bzw. 40 eingeleitet werden (Pfeile 55), vergleichsweise gering ist.

Die Plattenaufteilanlage 10 arbeitet im Grundsatz folgendermaßen: ein auf dem Zuführtisch 12 liegendes großformatiges plattenförmiges Werkstück 54 wird an seinem in Förderrichtung 28 gesehen hinteren Rand von den Spannzangen 30 A des Programmschiebers 24 A gegriffen. Durch eine Bewegung des Programmschiebers 24 A wird das Werkstück 54 dann in Förderrichtung 28 zur Aufteillinie 18 hin bewegt. Durch eine Bewegung der Säge wird dann das Werkstück 54 bearbeitet. Während einer solchen Bearbeitung werden, abhängig von der Art der Bearbeitung, beide Druckbalken 38 und 40 oder auch nur einer der beiden Druckbalken 38 und 40 durch eine Betätigung der Pneumatikzylinder 53 auf das Werkstück 54 abgesenkt. Hierdurch wird das Werkstück 54 zwischen dem Druckbalken 38 und/oder 40 und dem Maschinentisch 16 verklemmt. Nach dem Ende der Bearbeitung werden der oder die Druckbalken 38 und 40 wieder nach oben gefahren, wodurch das Werkstück 54 frei wird und beispielsweise mittels des Programmschiebers 24 A zum Entnahmetisch 14 geschoben werden kann. Möglich ist auch, dass ein Benutzer das bearbeitete Werkstück 54 von Hand auf den Entnahmetisch 14 zieht oder das Werkstück 54 durch eine nicht gezeigte automatische Fördereinrichtung, beispielsweise einen Roboter, weitergeführt bzw. bewegt wird.

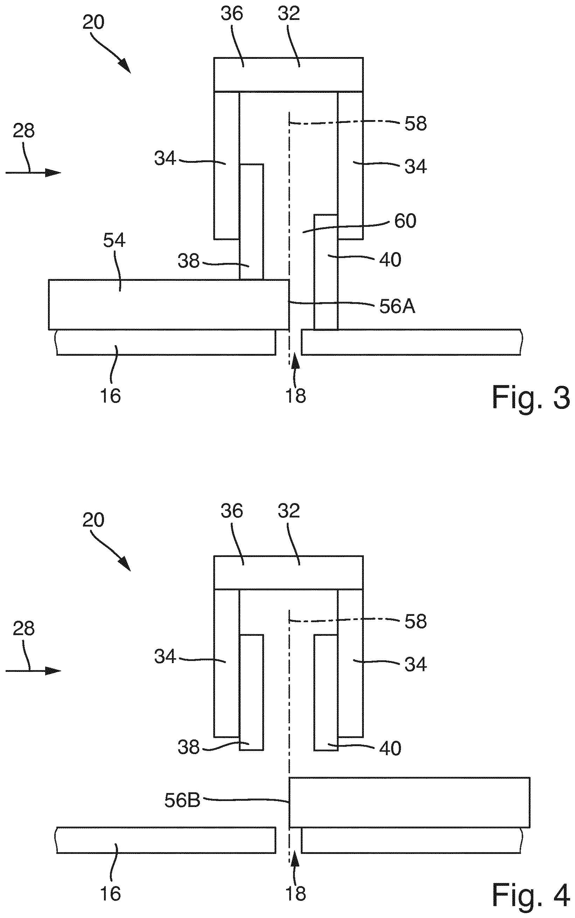

Eine Betriebssituation bei einer ersten Art der Bearbeitung des Werkstücks 54 ist in Figur 3 gezeigt: diese Art der Bearbeitung wird als "vorderer Kratzschnitt" bezeichnet. Bei einem solchen vorderen Kratzschnitt wird lediglich der in Förderrichtung 28 gesehen vordere Rand 56 A des Werkstücks 54 bearbeitet. Dabei ist die Länge des Materialabtrags am Werkstück 54 kleiner als die Dicke des Sägeblatts, dessen Mittelebene in Figur 3 und den nachfolgenden Figuren durch eine strichpunktierte Linie mit dem Bezugszeichen 58 angedeutet ist.

Während eines solchen vorderen Kratzschnitts wird das Werkstück 54 weiterhin von den Spannzangen 30 A des Programmschiebers 24 A gehalten. Während der erste Druckbalken 38, der auf der dem Zuführtisch 12 zugewandten Seite der Aufteillinie 18 angeordnet ist, auf das Werkstück 54 abgesenkt wird und dieses hierdurch gegen den Maschinentisch 16 klemmt, wird der zweite Druckbalken 40, der auf der dem Entnahmetisch 14 zugewandten Seite der Aufteillinie 18 angeordnet ist, auf den Maschinentisch 16 abgesenkt. Hierdurch wird verhindert, dass der bei dem vorderen Kratzschnitt entstehende Sägestaub auf den Entnahmetisch 14 gelangt. Der zweite Druckbalken 40 wirkt also als Staubschutzvorhang.

Man erkennt aus Figur 3, dass durch den C-förmigen Träger 32 und die beiden Druckbalken 38 und 40 ein geschlossener Kanal 60 gebildet wird. Somit kann durch die oben erwähnte Absaugung an dem dem Winkellineal 31 benachbarten seitlichen Rand des Maschinentisches 16 der bei dem vorderen Kratzschnitt entstehende Sägestaub sehr effizient abgesaugt werden. Zur Verringerung des Volumens des Kanals 60 kann zwischen den beiden Druckbalken 38 und 40 ein Wandelement 62 angeordnet sein (Figur 2), dessen Ränder an den beiden Druckbalken 38 und 40 anliegen. Das Wandelement 62 ist stationär, so dass die beiden Druckbalken 38 und 40 bei ihrer vertikalen Bewegung an dem Wandelement 62 entlang gleiten. Bei einer nicht gezeigten Ausführungsform ist das Wandelement als elastisches Element ausgebildet, welches wist zwischen den beiden Druckbalken angeordnet ist.

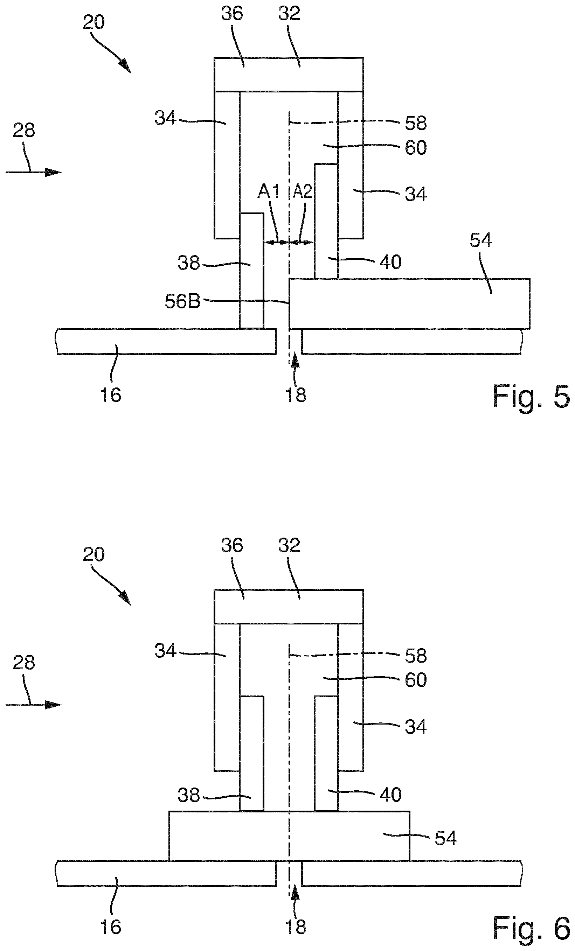

Eine zweite Betriebssituation zeigen die Figuren 4 und 5: in dieser Betriebssituation wird am in Förderrichtung 28 gesehen hinteren Rand 56 B des Werkstücks 54 ein "hinterer Kratzschnitt" durchgeführt. Hierzu wird das Werkstück 54 vom Programmschieber 24 A und den Spannzangen 30 A soweit in Förderrichtung 28 geschoben, bis sein in Förderrichtung 28 gesehen hinterer Rand 56 B im Bereich der Mittelebene 58 des Sägeblatts liegt. Dann wird der in den Figuren 4 und 5 rechte zweite Druckbalken 40 auf das Werkstück 54 abgesenkt, , wodurch das Werkstück 54 zwischen dem Druckbalken 40 und dem Maschinentisch 16 verklemmt wird, und der Programmschieber 24 A mit den Spannzangen 30 A zurückgefahren, und dann wird der erste Druckbalken 38 auf den Maschinentisch 16 abgesenkt. Nun kann analog zu der im Zusammenhang mit Figur 3 erläuterten Betriebssituation ein Kratzschnitt durchgeführt werden, wobei wiederum ein sehr gut abgedichteter Kanal 60 gebildet wird, durch den der beim Kratzschnitt entstehende Sägestaub mit hoher Effizienz abgesaugt werden kann.

Im Zusammenhang mit dem hinteren Kratzschnitt ist eine Eigenschaft der vorliegenden Plattenaufteilanlage 10 von besonderer Bedeutung: aus den Figuren ist ersichtlich, dass sich der Abstand A1 des ersten Druckbalkens 38 von der Aufteillinie 18 von dem Abstand A2 des zweiten Druckbalkens 40 von der Aufteillinie 18 unterscheidet (Figur 5). Genauer gesagt: der Abstand A1 des ersten Druckbalkens 38 von der Aufteillinie 18 ist kleiner als der Abstand A2 des zweiten Druckbalkens 40 von der Aufteillinie 18. Somit ist die Mittelebene 58 des Sägeblatts nicht mittig zur Druckbalkeneinrichtung 20.
Dies hat den Vorteil, dass die in Förderrichtung 28 gesehen vorderen Enden der Spannzangen 30 A dann, wenn sie ein Werkstück 54 für einen hinteren Kratzschnitt entsprechend den Figuren 4 und 5 positionieren, noch einen ausreichenden Abstand zum zweiten Druckbalken 40 haben, so dass dieser, wie in Figur 5 dargestellt, auf das Werkstück 54 abgesenkt werden kann, ohne von den Spannzangen 30 A behindert zu werden bzw. mit diesen zu kollidieren, wodurch das Werkstück 54 zwischen dem zweiten Druckbalken 40 und dem Maschinentisch 16 verklemmt wird. Nach dem Absenken des Druckbalkens 40 kann der Programmschieber 24 A mit den Spannzangen 30 A entgegen der Förderrichtung 28 zurückgefahren werden, und dann kann der erste Druckbalken 38 auf den Maschinentisch 16 abgesenkt werden.

Eine dritte Betriebssituation zeigt Figur 6: bei dieser handelt es sich um einen normalen "Trennschnitt". Für einen solchen wird das Werkstück 54 vom Programmschieber 24 A mit den Spannzangen 30 A in einer gewünschten Relativlage zur Aufteillinie 18 bzw. zur Mittelebene 58 des Sägeblatts positioniert. Dann werden die beiden Druckbalken 38 und 40 auf das Werkstück 54 abgesenkt, und der Trennschnitt wird durchgeführt.

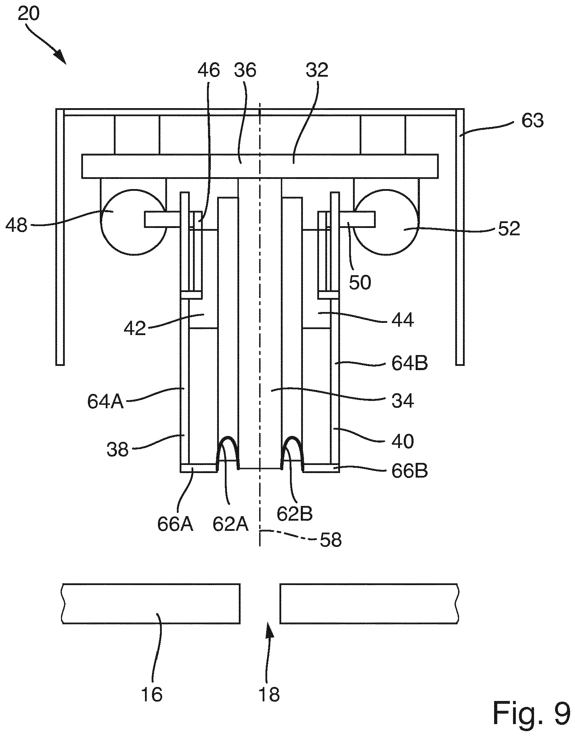

Figur 9 ist eine Darstellung ähnlich zu Figur 2, jedoch einer zweiten Ausführungsform einer Druckbalkeneinrichtung 20. Bei dieser hat der Träger 32 keinen C-förmigen sondern einen T-förmigen Querschnitt. Zusätzlich weist diese Druckbalkeneinrichtung 20 jedoch ein C-förmigen Querschnitt aufweisendes Gehäuse 63 auf, welches die Druckbalken 38 und 40, die Koppelwellen 48 und 52 und den oberen Bereich des T-förmigen Trägers 32 umgibt.

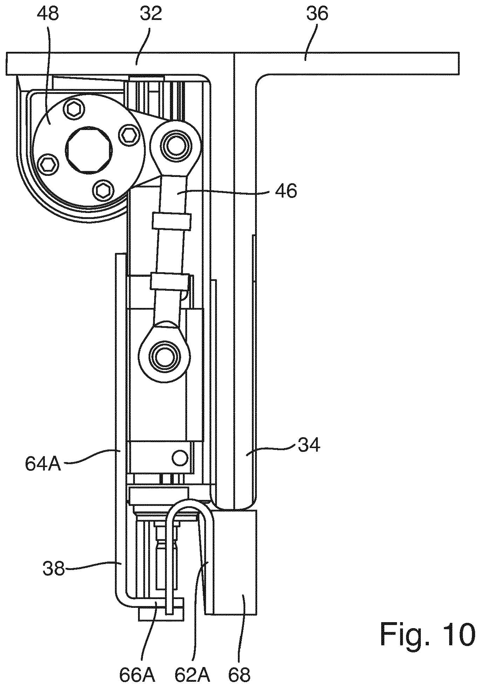

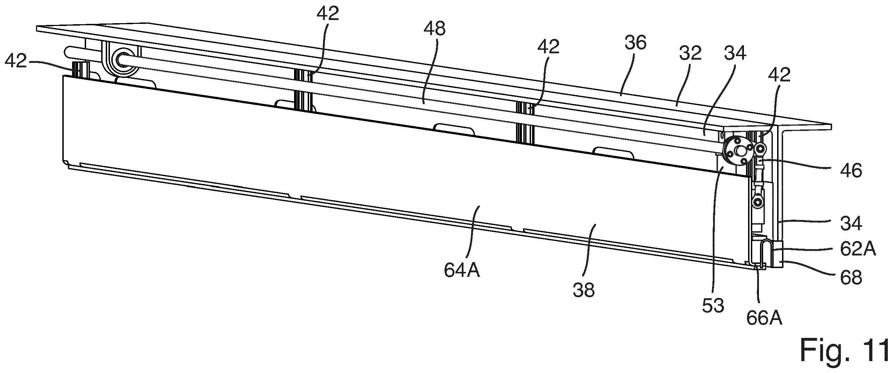

In den ebenfalls diese zweite Ausführungsform darstellenden Figuren 10 und 11 ist lediglich der erste Druckbalken 38 und die zu diesem gehörenden Komponenten dargestellt. Es versteht sich, dass der zweite Druckbalken 40 und die zu diesem gehörenden Komponenten spiegelbildlich auf der anderen Seite des vertikalen Schenkels 34 des T-förmigen Trägers 32 vorhanden sind.

Man erkennt aus den Figuren 10 und 11, dass dort die Kurbelwelle 48 unterhalb des in den Figuren 10 und 11 linken Abschnitts der horizontalen Basis 36 angeordnet ist. Man erkennt ferner, dass der Druckbalken 38 nicht durch ein gerades Blech gebildet ist, sondern ein L-förmigen Querschnitt aufweisendes Blech umfasst mit einem vertikalen Abschnitt 64 A und einem an dessen unteren Ende vorhandenen Umbug, der einen horizontalen Abschnitt 66 A bildet. Zwischen dem freien Rand des Umbugs 66 und einer am unteren Rand des vertikalen Schenkels 34 vorhandenen Verlängerungsleiste 68 ist vorliegend ein erstes U-förmiges Wandelement 62 A angeordnet. Dieses ist an der Verlängerungsleiste 68 befestigt. Wie aus Figur 9 hervorgeht, ist zwischen der Verlängerungsleiste 68 und dem freien Rand des Umbugs 66 B des zweiten Druckbalkens 40 ebenfalls ein-förmiges Wandelement 62 B angeordnet.

Die grundsätzliche Funktionsweise der in Figur 9 gezeigten Druckbalkeneinrichtung 20 ist gleich wie die der im Zusammenhang mit den Figuren 2 bis 8 gezeigten Druckbalkeneinrichtung 20.

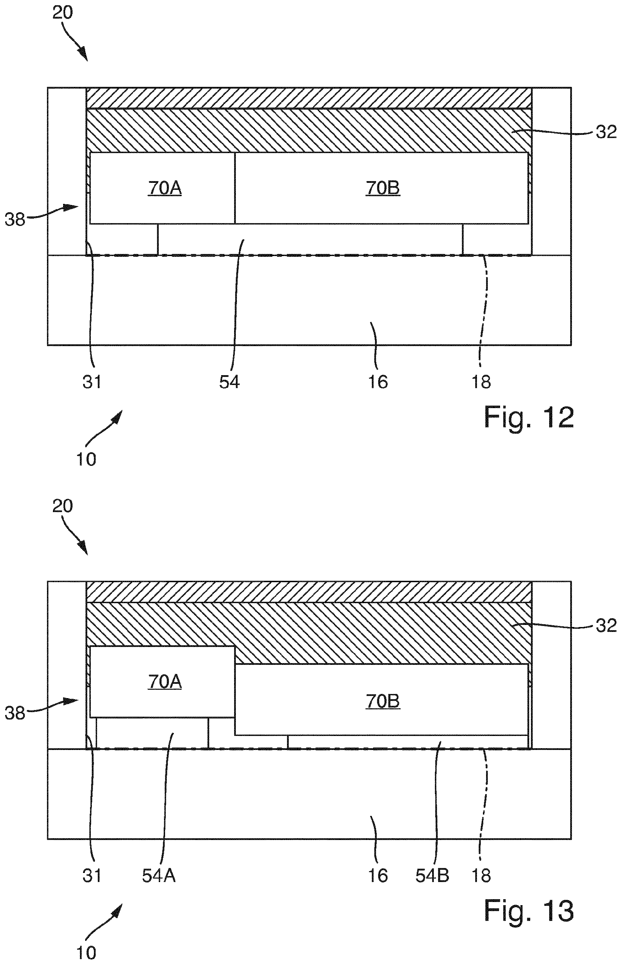

Eine dritte Ausführungsform einer Plattenaufteilanlage 10 bzw. einer hierzu gehörenden Druckbalkeneinrichtung 20 ist in den Figuren 12 und 13 gezeigt. Dabei kann bei dieser dritten Ausführungsform der Träger 32 sowohl C-förmigen Querschnitt aufweisen als auch T-förmigen Querschnitt. Der wesentliche Unterschied der dritten Ausführungsform gegenüber den vorhergehend beschriebenen Ausführungsformen besteht darin, dass der dort sichtbare erste Druckbalken 38 in Richtung der Aufteillinie 18 gesehen zwei oder mehrere unabhängig voneinander bewegbare Segmente 70 A und 70 B aufweist. Auch der in den Figuren 12 und 13 allerdings nicht sichtbare zweite Druckbalken 40 weist entsprechende unabhängig voneinander bewegbare Segmente auf. Hierzu verfügt jedes Segment eines Druckbalkens 38 bzw. 40 über einen eigenen Antrieb bzw. eigene Antriebe, die unabhängig voneinander angesteuert werden können. Die Antriebe können wie oben angegeben ausgebildet sein.

Man erkennt aus den Figuren 12 und 13, dass jenes Segment 70 A, welches zum Winkellineal 31 benachbart ist, sich über ungefähr ein Drittel der Aufteillinie 18 erstreckt, wohingegen jenes Segment 70 B, welches vom Winkellineal 31 beabstandet ist, sich über ungefähr zwei Drittel der Aufteillinie 18 erstreckt. In Figur 12 ist eine Betriebssituation gezeigt, in der ein einziges Werkstück 54 bearbeitet wird. In dieser Betriebssituation werden die beiden Segmente 70 A und 70 B des Druckbalkens 38 (und die entsprechenden Segmente des Druckbalkens 40) gleich angesteuert, und zwar derart, dass sie das Werkstück 54 gegen den Maschinentisch 16 klemmen.

In Figur 13 ist eine andere Betriebssituation gezeigt, in der, in Förderrichtung 28 gesehen, zwei nebeneinander liegende Werkstücke 54 A und 54 B bearbeitet werden sollen, wobei das Werkstück 54 A deutlich schmaler, jedoch dicker ist als das Werkstück 54 B. Insbesondere ist das Werkstück 54 A etwas schmaler als die in Figur 13 linken Segmente 70 A der Druckbalken 38 und 40, und das Werkstück 54 B ist etwas schmaler als die in Figur 13 rechten Segmente 70 B der Druckbalken 38 und 40. Hierdurch wird es ermöglicht, dass das in Figur 13 linke Werkstück 54 A nur durch das Segment 70 A der Druckbalken 38 und 40 geklemmt wird, wohingegen das in Figur 13 rechte Werkstück 54 B nur durch das Segment 70 B der Druckbalken 38 und 40 geklemmt wird. Trotz der unterschiedlich dicken Werkstücke 54 A und 54 B können diese somit gleichzeitig bearbeitet werden, beispielsweise das Werkstück 54 A durch einen Querschnitt und das Werkstück 54 B durch einen Nachschnitt.

Hierzu Folgendes: bei der Aufteilung von großformatigen plattenförmigen Werkstücken wird üblicherweise ein solches Werkstück zunächst durch Längsschnitte, die auch als Erstschnitte bezeichnet werden, in einzelne Streifen aufgeteilt. Diese Streifen werden dann um 90° gedreht und von der Säge durch Querschnitte, die auch als Zweitschnitte bezeichnet werden, weiter aufgeteilt. Einzelne der hieraus entstehenden Werkstücke werden eventuell nochmals um 90° gedreht und nochmals durch einen Nachschnitt, der auch als Drittschnitt bezeichnet wird, aufgeteilt. Durchaus möglich ist, dass sich hieran noch weitere Bearbeitungsschritte, beispielsweise Schnitte oder 5 Schnitte, anschließen.

Wenn der Abstand zwischen den Werkstücken 54 A und 54 B groß ist, können diese Werkstücke auch zeitversetzt nacheinander aufgeteilt werden. Voraussetzung hierfür ist jedoch ein zweiter Programmschieber oder eine Ausgestaltung ähnlich zu jener, wie sie in dem europäischen Patent EP 1 964 653 beschrieben und in Figur 1 gezeigt ist, bei der ein relativ breiter Programmschieber 24 A mit mehreren Spannzangen 30 A und ein seitlicher Schlitten 24 B mit einer speziellen Spannzange 30 B vorhanden sind. Es ergeben sich dann im Wesentlichen drei mögliche Verfahren: (1) nebeneinander angeordnete Werkstücke werden von dem relativ breiten Programmschieber 24 A und den dort angeordneten Spannzangen 30 A gehalten und gleichzeitig aufgeteilt. (2) Ein Werkstück wird von dem relativ breiten Programmschieber 24 A und den dort angeordneten Spannzangen 30 A und ein daneben liegendes Werkstück wird von dem seitlichen Schlitten 24 B mit seiner speziellen Spannzange 30 B gehalten, und beide Werkstücke werden gleichzeitig aufgeteilt. (3) Ein Werkstück wird von dem relativ breiten Programmschieber 24 A und den dort angeordneten Spannzangen 30 A und ein daneben liegendes Werkstück wird von dem seitlichen Schlitten 24 B mit seiner speziellen Spannzange 30 B gehalten, und beide Werkstücke werden zeitlich versetzt, also nacheinander, aufgeteilt.

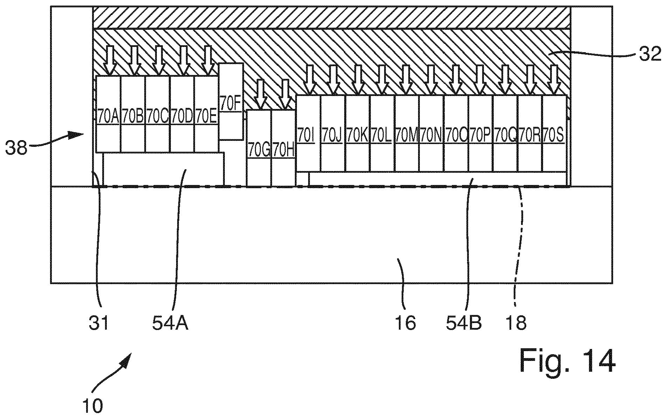

Eine vierte Ausführungsform einer Plattenaufteilanlage 10 bzw. einer Druckbalkeneinrichtung 20 ist in Figur 14 gezeigt. Diese ist ähnlich zu der Ausführungsform der Figuren 12 und 13, jedoch mit dem Unterschied, dass nicht nur zwei Segmente 70 A und 70 B vorhanden sind, sondern insgesamt 19 identisch ausgebildete Segmente 70 A bis 70 S. Alle Segmente 70 A bis 70 S eines Druckbalkens 38 bzw. 40 können unabhängig voneinander abgesenkt und angehoben werden, verfügen also über voneinander unabhängig ansteuerbare Antriebe. Da jedes einzelne Segment 70 A - 70 S nur ein geringes Gewicht hat und eine geringe Klemmkraft auf das Werkstück 54 aufzubringen hat, kann der Antrieb vergleichsweise klein sein.

Man erkennt aus Figur 14, dass auch hier die beiden nebeneinanderliegenden Werkstücke 54 A und 54 B trotz ihrer unterschiedlichen Dicke sicher gegen den Maschinentisch 16 geklemmt werden können. Durch die Vielzahl von Segmenten 70 A bis 70 S können dabei Werkstücke 54 A und 54 B mit ganz unterschiedlicher Breite sicher geklemmt werden, und dabei können jene Segmente 70 G und 70 H, die zwischen den beiden Werkstücke 54 A und 54 B angeordnet sind, bis auf den Maschinentisch 16 abgesenkt werden, wodurch die sonst dort vorhandene Lücke geschlossen und der im Inneren der Druckbalkeneinrichtung 20 vorhandene Kanal 60 zur Seite hin vergleichsweise dicht geschlossen ist.

## Patentansprüche

1. Plattenaufteilanlage (10) mit einem Maschinentisch (16), mit einer in dem Maschinentisch (16) vorhandenen Aufteillinie (18), und mit einer in einem Bereich oberhalb von der Aufteillinie (18) angeordneten Druckbalkeneinrichtung (20) mit mindestens einem ersten Druckbalken (38), welcher an einem vorzugsweise parallel zur Aufteillinie (18) verlaufenden stationären Träger (32) gehalten und mittels mindestens eines Antriebs (53) orthogonal zu einer Ebene des Maschinentisches (16) bewegbar ist, wobei der Antrieb (53) und/oder eine Führungseinrichtung (42) der Druckbalkeneinrichtung (20) in einem Bereich oberhalb von der Aufteillinie (18) angeordnet ist, und wobei der erste Druckbalken (38) in Richtung der Aufteillinie (18) gesehen mindestens zwei unabhängig voneinander bewegbare Segmente (70) aufweist, **dadurch gekennzeichnet, dass** die Plattenaufteilanlage (10) zwei Programmschieber (24A, 24B) umfasst, wobei einer der Programmschieber ein seitlicher Schlitten (24B) ist, wobei der Antrieb (53) einen Kurbeltrieb umfasst.

2. Plattenaufteilanlage (10) nach Anspruch 1, **dadurch gekennzeichnet, dass** der Antrieb (53) eine Mehrzahl von Teil-Antrieben umfasst.

3. Plattenaufteilanlage (10) nach Anspruch 2, **dadurch gekennzeichnet, dass** die Teil-Antriebe (53) mechanisch miteinander gekoppelt sind (48, 52).

4. Plattenaufteilanlage (10) nach einem der vorhergehenden Ansprüche, **dadurch gekennzeichnet, dass** jedem Segment (70) ein eigener Antrieb (53) zugeordnet ist.

5. Plattenaufteilanlage (10) nach einem der vorhergehenden Ansprüche, **dadurch gekennzeichnet, dass** mindestens zwei Segmente (70A, 70B) in Richtung der Aufteillinie (18) gesehen unterschiedlich lang sind.

6. Plattenaufteilanlage (10) nach einem der vorhergehenden Ansprüche, **dadurch gekennzeichnet, dass** sie eine Fördereinrichtung (24) zum Bewegen eines Werkstücks (54) längs zu einer Förderrichtung (28), die orthogonal zur Aufteillinie (18) liegt, umfasst, und dass die Druckbalkeneinrichtung (20) einen zweiten Druckbalken (40) umfasst, wobei der erste Druckbalken (38) in Förderrichtung (28) gesehen auf der einen Seite und der zweite Druckbalken (40) in Förderrichtung (28) gesehen auf der anderen Seite der Aufteillinie (18) angeordnet sind, und wobei die beiden Druckbalken (38, 40) vorzugsweise unabhängig voneinander bewegbar sind.

7. Plattenaufteilanlage (10) nach Anspruch 6, **dadurch gekennzeichnet, dass** der erste Druckbalken (38) und der zweite Druckbalken (40) identisch, vorzugsweise zueinander spiegelbildlich ausgebildet sind.

8. Plattenaufteilanlage (10) nach einem der Ansprüche 6 oder 7, **dadurch gekennzeichnet, dass** die beiden Druckbalken (38, 40) an einem gemeinsamen Träger (32) gehalten sind.

9. Plattenaufteilanlage (10) nach Anspruch 8, **dadurch gekennzeichnet, dass** der gemeinsame Träger (32) im Querschnitt C-förmig ist.

10. Plattenaufteilanlage (10) nach Anspruch 8, **dadurch gekennzeichnet, dass** der gemeinsame Träger (32) im Querschnitt T-förmig ist.

11. Plattenaufteilanlage (10) nach einem der Ansprüche 6-10, **dadurch gekennzeichnet, dass** zwischen den Druckbalken (38, 40) ein Wandelement (62) angeordnet ist, welches eine obere Begrenzungswand eines Absaugkanals (60) bildet.

12. Plattenaufteilanlage (10) nach einem der Ansprüche 6-11, **dadurch gekennzeichnet, dass** sich der Abstand (A1) des ersten Druckbalkens (38) von der Aufteillinie (18) von dem Abstand (A2) des zweiten Druckbalkens (40) von der Aufteillinie (18) unterscheidet.

13. Verfahren zum Betreiben einer Plattenaufteilanlage (10) nach einem der vorhergehenden Ansprüche, **dadurch gekennzeichnet, dass** gleichzeitig ein erstes Werkstück mit einer ersten Dicke und ein zweites Werkstück mit einer zweiten Dicke aufgeteilt werden.

14. Verfahren zum Betreiben einer Plattenaufteilanlage nach einem der Ansprüche 1-12, welche mindestens zwei nebeneinander angeordnete und unabhängig voneinander bewegbare Programmschieber (24A, 24 B) aufweist, **dadurch gekennzeichnet, dass** ein ersten Werkstück von dem ersten Programmschieber (24 A) und ein zweites Werkstück von dem zweiten Programmschieber (24 B) gehalten und relativ zu der Aufteillinie positioniert wird, und dass die Werkstücke zeitlich versetzt zueinander bearbeitet werden.

## Claims

1. Panel dividing system (10) comprising a machine table (16), comprising a dividing line (18) present in the machine table (16), and comprising a pressure beam device (20) that is arranged in a region above the dividing line (18) and has at least one first pressure beam (38) which is held on a stationary support (32) extending preferably in parallel with the dividing line (18) and can be moved orthogonally with respect to a plane of the machine table (16) by means of at least one drive (53), the drive (53) and/or a guiding device (42) of the pressure beam device (20) being arranged in a region above the dividing line (18), and the first pressure beam (38), when viewed in the direction of the dividing line (18), having at least two segments (70) that can be moved independently of one another, **characterized in that** the panel dividing system (10) comprises two program feeders (24A, 24B), one of the program feeders being a lateral slide (24B), the drive (53) comprising a crank drive.

2. Panel dividing system (10) according to claim 1, **characterized in that** the drive (53) comprises a plurality of partial drives.

3. Panel dividing system (10) according to claim 2, **characterized in that** the partial drives (53) are mechanically coupled to one another (48, 52).

4. Panel dividing system (10) according to any of the preceding claims, **characterized in that** each segment (70) is associated with a specific drive (53).

5. Panel dividing system (10) according to any of the preceding claims, **characterized in that** at least two segments (70A, 70B) are different lengths when viewed in the direction of the dividing line (18).

6. Panel dividing system (10) according to any of the preceding claims, **characterized in that** it comprises a conveying device (24) for moving a workpiece (54) longitudinally with respect to a conveying direction (28) which is orthogonal with respect to the dividing line (18), and **in that** the pressure beam device (20) comprises a second pressure beam (40), the first pressure beam (38), when viewed in the conveying direction (28), being arranged on one side and the second pressure beam (40), when viewed in the conveying direction (28), being arranged on the other side of the dividing line (18), and it preferably being possible to move the two pressure beams (38, 40) independently of one another.

7. Panel dividing system (10) according to claim 6, **characterized in that** the first pressure beam (38) and the second pressure beam (40) are identical, preferably the mirror image of one another.

8. Panel dividing system (10) according to claim 6 or claim 7, **characterized in that** the two pressure beams (38, 40) are held on a common support (32).

9. Panel dividing system (10) according to claim 8, **characterized in that** the common support (32) has a C-shaped cross section.

10. Panel dividing system (10) according to claim 8, **characterized in that** the common support (32) has a T-shaped cross section.

11. Panel dividing system (10) according to any of claims 6 to 10, **characterized in that** a wall element (62) is arranged between the pressure beams (38, 40), which wall element forms an upper boundary wall of an extraction channel (60).

12. Panel dividing system (10) according to any of claims 6 to 11, **characterized in that** the distance (A1) between the first pressure beam (38) and the dividing line (18) differs from the distance (A2) between the second pressure beam (40) and the dividing line (18).

13. Method for operating a panel dividing system (10) according to any of the preceding claims, **characterized in that** a first workpiece having a first thickness and a second workpiece having a second thickness are simultaneously divided.

14. Method for operating a panel dividing system according to any of claims 1 to 12, which system has at least two program feeders (24A, 24B) that are arranged next to one another and can be moved independently of one another, **characterized in that** a first workpiece is held by the first program feeder (24A) and a second workpiece is held by the second program feeder (24B) and positioned relative to the dividing line, and **in that** the workpieces are processed in a temporally offset manner.

## Revendications

1. Installation de séparation de panneaux (10) comprenant une table de machine (16), une ligne de séparation (18) présente dans la table de machine (16), et un dispositif à barre de pression (20) agencé dans une zone au-dessus de la ligne de séparation (18) et pourvu d'au moins une première barre de pression (38), laquelle est retenue sur un support (32) fixe s'étendant de préférence parallèlement à la ligne de séparation (18) et peut être déplacée au moyen d'au moins un entraînement (53) perpendiculairement à un plan de la table de machine (16), dans lequel l'entraînement (53) et/ou un dispositif de guidage (42) du dispositif à barre de pression (20) sont agencés dans une zone au-dessus de la ligne de séparation (18), et dans lequel la première barre de pression (38), vue en direction de la ligne de séparation (18), présente au moins deux segments (70) pouvant être déplacés indépendamment l'un de l'autre, **caractérisée en ce que** l'installation de séparation de panneaux (10) comporte deux curseurs de programme (24A, 24B), dans lequel un des curseurs de programme est un coulisseau latéral (24B), dans lequel l'entraînement (53) comporte une commande à manivelle.

2. Installation de séparation de panneaux (10) selon la revendication 1, **caractérisée en ce que** l'entraînement (53) comporte une pluralité de parties d'entraînement.

3. Installation de séparation de panneaux (10) selon la revendication 2, **caractérisée en ce que** les parties d'entraînement (53) sont accouplées mécaniquement les unes aux autres (48, 52).

4. Installation de séparation de panneaux (10) selon l'une quelconque des revendications précédentes, **caractérisée en ce qu'**un entraînement (53) propre est associé à chaque segment (70).

5. Installation de séparation de panneaux (10) selon l'une quelconque des revendications précédentes, **caractérisée en ce qu'**au moins deux segments (70A, 70B) sont plus ou moins longs vus en direction de la ligne de séparation (18).

6. Installation de séparation de panneaux (10) selon l'une quelconque des revendications précédentes, **caractérisée en ce qu'**elle comporte un dispositif de transport (24) destiné à déplacer une pièce (54) longitudinalement par rapport à une direction de transport (28), qui se situe perpendiculairement à la ligne de séparation (18), et **en ce que** le dispositif à barre de pression (20) comporte une deuxième barre de pression (40), dans lequel la première barre de pression (38), vue dans la direction de transport (28), est agencée sur l'une des faces et la deuxième barre de pression (40), vue dans la direction de transport (28), est agencée sur l'autre face de la ligne de séparation (18), et dans lequel les deux barres de pression (38, 40) peuvent être déplacées de préférence indépendamment l'une de l'autre.

7. Installation de séparation de panneaux (10) selon la revendication 6, **caractérisée en ce que** la première barre de pression (38) et la deuxième barre de pression (40) sont identiques, de préférence réalisées en symétrie spéculaire l'une par rapport à l'autre.

8. Installation de séparation de panneaux (10) selon l'une quelconque des revendications 6 ou 7, **caractérisée en ce que** les deux barres de pression (38, 40) sont retenues sur un support (32) commun.

9. Installation de séparation de panneaux (10) selon la revendication 8, **caractérisée en ce que** le support (32) commun est en forme de C en section transversale.

10. Installation de séparation de panneaux (10) selon la revendication 8, **caractérisée en ce que** le support (32) commun est en forme de T en section transversale.

11. Installation de séparation de panneaux (10) selon l'une quelconque des revendications 6 à 10, **caractérisée en ce qu'**un élément paroi (62), lequel forme une paroi de délimitation d'un canal d'aspiration (60), est agencé entre les barres de pression (38, 40).

12. Installation de séparation de panneaux (10) selon l'une quelconque des revendications 6 à 11, **caractérisée en ce que** l'écart (A1) entre la première barre de pression (38) et la ligne de séparation (18) se différencie de l'écart (A2) entre la deuxième barre de pression (40) et la ligne de séparation (18).

13. Procédé de fonctionnement d'une installation de séparation de panneaux (10) selon l'une quelconque des revendications précédentes, **caractérisé en ce qu'**une première pièce présentant une première épaisseur et une deuxième pièce présentant une deuxième épaisseur sont séparées simultanément.

14. Procédé de fonctionnement d'une installation de séparation de panneaux selon l'une quelconque des revendications 1 à 12, laquelle comprend au moins deux curseurs de programme (24A, 24B) agencés l'un à côté de l'autre et pouvant être déplacés indépendamment l'un de l'autre, **caractérisé en ce qu'**une première pièce est retenue par le premier curseur de programme (24A) et une deuxième pièce est retenue par le deuxième curseur de programme (24B) et celles-ci sont positionnées par rapport à la ligne de séparation, et **en ce que** les pièces sont traitées de manière décalée dans le temps l'une par rapport à l'autre.
